# EUROPÄISCHE PATENTSCHRIFT

(11) **EP 4 162 010 B1**
(45) Veröffentlichungstag und Bekanntmachung des Hinweises auf die Patenterteilung: **26.06.2024**
(21) Anmeldenummer: 21733898.7
(22) Anmeldetag: 09.06.2021
(51) Int. Cl.: C10B 47/30, C10B 47/44, C10B 53/07

(54) **VORRICHTUNG UND VERFAHREN ZUR PYROLYSE ORGANISCHER AUSGANGSSTOFFE**
DEVICE AND METHOD FOR THE PYROLYSIS OF ORGANIC STARTING MATERIALS
DISPOSITIF ET PROCÉDÉ DE PYROLYSE DE PRODUITS DE DÉPART ORGANIQUES

(30) Priorität: 09.06.2020 DE 102020115348
(43) Veröffentlichungstag der Anmeldung: 12.04.2023
(73) Patentinhaber: Klean Industries, Vancouver, BC V7Y 1B3 (CA)
(72) Erfinder: PELZ, Eckard, 09648 Mittweida (DE); LÖFFLER, Martin, 10243 Berlin (DE)
(74) Vertreter: Eisenführ Speiser
(86) Internationale Anmeldenummer: PCT/EP2021/065485
(87) Internationale Veröffentlichungsnummer: WO 2021/250103

(56) Entgegenhaltungen:
- WO-A1-94/02781
- WO-A1-2011/034409
- DE-A1-102014 015 281
- US-A1- 2016 024 390
- US-B1- 6 221 329

## Beschreibung

Die vorliegende Erfindung betrifft eine Vorrichtung und ein Verfahren zur Pyrolyse organischer Ausgangsstoffe.

Eine Pyrolyse bezeichnet allgemein ein thermisches Spalten organischer Verbindungen. Dabei wird unter Sauerstoffausschluss und bei hohen Temperaturen, beispielsweise zwischen 300°C und 900°C, ein Bindungsbruch innerhalb größerer Moleküle eines Ursprungsmaterials erzwungen. Mittels der Pyrolyse des festen Ursprungsmaterials werden in der Regel Gase, Flüssigkeiten und Feststoffe gewonnen, wobei die Gase und Flüssigkeiten aus einem bei der Pyrolyse entstehenden Pyrolysedampf abgeschieden werden. Die Mengenanteile und Zusammensetzungen sind dabei abhängig von dem Ursprungsmaterial, der Pyrolysetemperatur, den Druckverhältnissen und der Reaktionsdauer. Bei der Pyrolyse von Polymeren entsteht häufig ein zugehöriges Monomer als Teil des Pyrolysedampfes.

Vorrichtungen und Verfahren zur Pyrolyse organischer Ausgangsstoffe sind grundsätzlich bekannt.

Beispielsweise ist aus der Veröffentlichung EP 0 592 057 B1 ein Verfahren zur Pyrolyse von Altreifen bekannt, bei dem die Altreifen einer Pyrolyse in einem Metallbad unter reduziertem Druck und unter Luft- und Wasserausschluss zersetzt werden. Der bei der Pyrolyse entstehende Pyrolysedampfwird nach einem Abkühlen in eine gasförmige oder eine flüssige Phase getrennt. Das Verfahren sieht weiter vor, dass ein Teil der gasförmigen Phase anschließend wieder in den Reaktorinnenraum über dem Metallbad zurückgeführt wird und außerdem kontinuierlich Stickstoff in den Reaktorinnenraum über dem Metallbad eingeleitet wird. Bei dem aus dieser Veröffentlichung bekannten Verfahren wird die Pyrolysereaktion vor allem durch ein Steuern der Geschwindigkeit des Gasstromes im Reaktionsraum kontrolliert.

Ein Verfahren, bei dem die Pyrolyse in einem kontinuierlichen Prozess in einem Drehrohrreaktor durchgeführt wird, ist aus DE 10 2014 015 281 A1 bekannt. Aus WO 2011/034409 A1 ist ein Reaktor zur Pyrolyse von Biomasse bekannt, bei dem eine Temperatur in einer Heizkammer durch eine Menge heißen Gases eingestellt wird, die durch entsprechende Ventile fließt.

Ein wichtiges Produkt, dass durch die Pyrolyse von Altreifen gewonnen werden kann, ist Ruß, und insbesondere hochwertiger, als "Carbon Black" bezeichneter Ruß mit einer gro-ßen spezifischen Oberfläche.

Um ein für die Weiterverarbeitung zum recovered Carbon Black geeignetes Material zu erzeugen, muss ein kontinuierlich geführter Prozess zur Depolymerisation bzw. Pyrolyse von Altgummi so durchgeführt werden, dass
1. die Reaktionstemperatur und Reaktionswärmemenge die Depolymerisation der Kautschukbestandteile erreicht und trotzdem eine weitere tiefere Spaltung der Kohlenwasserstoffe bis zum Kohlenstoff vermieden wird,
2. die Bedingungen im Reaktor nach Ende der Reaktionsphase (-zone) eine nahezu vollständige Entfernung der Kohlenwasserstoffreste von dem verbliebenen Feststoffstrom sicherstellen und
3. die heißen gasförmigen Spaltprodukte schnell aus dem Reaktorinnenraum am Ort der Entstehung herausgeführt und schlagartig abgekühlt werden, um Rekombination (erneute Polymerisation) der Spaltprodukte und somit die Bildung schwer siedender Anteile und deren Ablagerung am Feststoff zu vermeiden.

Material aus Pyrolyseprozessen welches sich zur Weiterverarbeitung zu recovered Carbon Black eignet, zeichnet sich insbesondere dadurch aus, dass der durch Toluol extrahierbare Anteil im Material - z.B. der Ölgehalt - kleiner als 1%, vorzugsweise kleiner als 0,5% ist. Desweitern ist für die beabsichtigte Verwendung als Füllstoff in Gummi- und Kunststoffanwendungen die Morphologie der Kohlenstoffpartikel entscheidend. Bei der Pyrolyse zusätzlich gebildeter Kohlenstoff besitzt nicht die morphologischen Eigenschaften der herkömmlichen Carbon Blacks und verschlechtert die Qualität des Endproduktes. Der als Ölkohle oder auch "Char" bezeichnete Anteil sollte 2% vom Gesamtkohlenstoff nicht überschreiten.

Es ist ein der vorliegenden Erfindung zugrundeliegendes technisches Problem, eine verbesserte Vorrichtung zur kontinuierlichen Pyrolyse organischer Ausgangsstoffe zu schaffen.

Erfindungsgemäß wird hierfür ein System zur Pyrolyse von Altmaterial, insbesondere zur Depolymerisation von zerkleinertem Altreifenmaterial, und zum Herstellen eines Ausgangsmaterials, das zu recovered Carbon Black weiterverarbeitet werden kann, vorgeschlagen. Das System umfasst wenigstens einen Drehrohrreaktor, eine Quencheinheit und Brennereinheit.

Der Drehrohrreaktor weist eine im Betrieb um eine Längsachse rotierende Reaktortrommel mit einer Trommelwand auf, die einen Reaktorinnenraum umschließt. Auf der Innenseite der Trommelwand sind Fördereinrichtungen angeordnet, die bei rotierender Reaktortrommel ein Fördern zu verarbeitenden Altmaterials bewirken. Der Reaktorinnenraum weist wenigstens eine Aufheizzone, eine Reaktionszone und eine Entgasungszone auf. Die Reaktortrommel einen Altmaterialeinlass sowie einen (Pyrolyse-) Feststoffauslass und einen (Pyrolyse-) Gaslauslass auf. Die Reaktortrommel ist von einem Heizmantelgehäuse umschlossen und drehbar gelagert, so dass sich die Reaktortrommel innerhalb des Heizmantelgehäuses um ihre Rotationsachse drehen kann. Das Heizmantelgehäuse umschließt einen Heizmantelraum, der innen von der Trommelwand der Reaktortrommel begrenzt ist.

Die Brennereinheit ist zum Verbrennen von Gas (vorzugsweise *Pyrolysegas*) zu einem Heizgas und zum Erzeugen eines Heizgasstroms durch den Heizmantelraum ausgebildet und hierzu über Heizgasleitungen mit dem Heizmantelgehäuse derart verbunden, dass das Heizgas in den Heizmantelraum eingeleitet werden kann, so dass die in dem Heizmantelraum befindliche Reaktortrommel mittels des Heizgases von außen indirekt beheizt werden kann.

Die Quencheinheit ist mit dem Gasauslass des Drehrohrreaktors verbunden und zum Kühlen von im Betrieb in dem Reaktorinnenraum entstehenden Pyrolysegasen ausgebildet.

Erfindungsgemäß sind über die Länge des Heizmantelgehäuses mehrere Heizgasauslassklappen verteilt, die es ermöglichen die Strömung des Heizgases durch den Heizmantelraum derart zu beeinflussen, dass der Aufheizzone, der Reaktionszone und der Entgasungszone in dem Reaktorinnenraum jeweils unterschiedliche Wärmemenge zugeführt werden können.

Die Fördereinrichtungen sind Transportwendeln, die von entlang einer Helixbahn verlaufenden, von der Trommelwand ausgehenden, nach innen in den Reaktorinnenraum ragenden Leitblechen oder-vorsprüngen gebildet sind.

Die Wendelgänge der Transportwendeln haben in der Reaktionszone und in der Entgasungszone eine unterschiedliche Steigung, um auf diese Weise die Verweilzeiten des Pyrolyseguts in den verschiedenen Zonen zu optimieren.

Die der Erfindung zugrundeliegenden Erkenntnisse hinsichtlich der spezifischen Prozessbedingungen und konstruktiver Merkmale der Bestandteile des Systems führen zu Lösungen, um einerseits die Effektivität des Verfahrens bei dessen Anwendung zur Altreifen-/Altgummipyrolyse weiter zu verbessern und andererseits die geforderte Qualität der Pyrolyseprodukte zu gewährleisten.

Die Erfindung schließt die Erkenntnis ein, dass für kontinuierlich arbeitende Systeme - im Gegensatz zu batchweisen (absatzweisen) Pyrolyseprozessen - besondere Herausforderungen bestehen, um eine hohe Prozessstabilität und gleichbleibende Produktqualitäten über einen langen Betriebszeitraum zu gewährleisten. Darum ist eine fein abgestimmte (geregelte) Prozessweise des Gesamtsystems aus Drehrohrreaktor, Quencheinheit und Brennersystem erforderlich. Ein weiteres Problem für eine dauerhaft stabile Prozessführung besteht darin, dass im Übergang vom Reaktorinnenraum zur Quencheinheit die mit den heißen Spaltgasen mitgeschleppten Feststoffpartikel sukzessive abgelagert werden und letztendlich zum Verstopfen der Rohrleitung zwischen Reaktor und Quencheinheit führen können.

Mit dem erfindungsgemäßen System und dem erfindungsgemäßen Verfahren ist es möglich, die Verweilzeiten des Pyrolysegutes in den einzelnen Zonen im Inneren des Reaktorraums so anzupassen, dass die jeweiligen Prozesse wie Aufheizen, Spaltreaktion (Pyrolyse/Depolymerisation) und Restentgasen bei vorgegebener Drehzahl der Reaktortrommel und Durchsatz an Pyrolysegut vollständig und zonenbezogen ablaufen. Dazu weisen die Transportwendeln im Inneren der Reaktortrommel zonenbezogen unterschiedliche Steigungen auf. Der Trommeldurchmesser einzelner Längsabschnitte der Reaktortrommel und der Abstand zwischen den Wendelgängen der Transportwendeln ist ebenfalls zonenbezogen so gewählt, dass Schütthöhe und Durchmischung der Schüttung dem jeweilig ablaufenden Prozess genügen. Neben einem guten Wärmeübergang vom Reaktormantelraum zur Trommelwand und von der Trommelwand zum Pyrolysegut ist eine gute Durchmischung der Feststoffschüttung für einen hinreichenden Stoff- und Wärmeübergang erforderlich. Die Durchmischung wird durch in den Wendelgängen angeordnete Hubschaufeln realisiert.

Durch die Rotation der Reaktortrommel und die Bewegung des Materials in der Reaktortrommel wird ein Teil der Feststoffe aufgewirbelt und mit den heißen Spaltgasen wegtransportiert. Ein Nachteil einer bisherigen Reaktorkonstruktion wardie Anordnung des Gasaustrittes am Ende der Reaktortrommel. Dadurch wurde der in der Entgasungszone aufgewirbelte Feststoff (staubförmig) durch die in der Reaktionszone entstehenden Spaltgase mitgeschleppt und ausgetragen. Um dieses Problem zu vermeiden ist vorzugsweise ein Pyrolysegasauslassrohr vorgesehen, mit dem die Spaltgase direkt der Reaktionszone entnommen und zur Quencheinheit geleitet werden können. Ein in die Reaktortrommel ausgangsseitig hineinragendes und durch die Entgasungszone bis zum Ende der Reaktionszone reichendes Pyrolysegasauslassrohr hat sich als Lösung bewährt, um diesem Nachteil zu begegnen. Gleichzeitig wird durch diese Lösung gewährleistet, dass die Spaltprodukte schneller den Reaktorinnenraum verlassen können und somit die oben genannten Nachteile (Rekombination und zusätzliche Bildung von Spalt-Kohlenstoff) ebenfalls vermieden werden und somit die Qualität des zurückgewonnenen Carbon Blacks verbessert wird.

Ein vollständiges Rückhalten von Feststoffen aus der Gasphase ist auch mit der o.g. Lösung nicht möglich. Es kommt längerfristig zu Ablagerungen von koksartigen Verbindungen und Kohlenstoffstaub im Pyrolysegasauslassrohr zwischen Quencheinheit und Reaktorraum. Deren Beseitigung wird durch eine in regelmäßigen Abständen (z.B. zweimal wöchentlich) betriebene Rohrreinigungsvorrichtung erreicht. Während des Reinigungsvorganges wird der Pyrolyseprozess kurzzeitig unterbrochen indem kein Material zugeführt wird, um die Spaltgasbildung zu unterbrechen. Die Rohrreinigungsvorrichtung ist dadurch gekennzeichnet, dass ein den vollen Rohrdurchmesser des Pyrolysegasauslassrohrs ausfüllendes Putzelement mittels einer Zahnstange durch das Pyrolysegasauslassrohr - beginnend am Quencheintritt bis zum Rohrende innerhalb der Reaktortrommel - geführt wird, wobei die Ablagerungen abgetragen und bis zu einer Eingangsmündung des Pyrolysegasauslassrohrs transportiert werden und somit in die Reaktionszone der Reaktortrommel gelangen. Anschließend wird die Zahnstange mit dem Putzelement wieder rückwärts bewegt und somit aus dem Pyrolysegasauslassrohr vollständig herausgeführt. Die Zahnstange wird durch eine Antriebseinheit mit einem Getriebemotor und einem Zahnrad angetrieben. Die Zahnstange, das Putzelement und das Antriebszahnrad befinden sich in Ruhestellung in einem dem Pyrolysegasauslassrohr direkt gegenüber angeordnetem und geschlossenem Rohrstück.

Für einen effizienten Betrieb der Pyrolysereaktoren hat sich eine Anordnungsvariante bewährt, bei der ein Brennersystem zwei Pyrolysereaktoren mit Heizgas versorgt. Das im Brennraum durch Verbrennung der Pyrolysegase mit Luft erzeugte Heizgas erreicht dort eine Temperatur von 850°C. Das Heizgas wird in einer Mischstrecke mit rezirkulierendem und bereits genutztem Heizgas gemischt, um die erforderliche Heizgastemperatur von 580 bis 680 °C zu erreichen und einen großen Volumenstrom Heizgas bereitzustellen. Die regulierte Wärmezufuhr zu jedem Reaktor erfolgt durch Heizgaseinlassklappen am eintragsseitigen unteren Eintritt zum Heizmantelraum der Drehrohrreaktoren.

Die Wärmeverteilung über die Längsrichtung der Reaktortrommel wird durch oben an dem Heizmantelgehäuse angeordnete Heizgasauslassklappen realisiert, die über die Länge des Heizmantelgehäuses verteilt sind und deren jeweiliger Öffnungsgrad den Wärmebedarf der jeweiligen Reaktorzone sicherstellt. Zum Einstellen einer optimalen Wärmeverteilung ist es vorteilhaft, wenn die Stellungen (Öffnungsgrade) der Heizgasauslassklappen sehr genau eingestellt werden können und aufeinander abgestimmt sind. Eine bevorzugte, für Reifenschnitzel bewährte Klappenstellungskonfiguration bewirkt eine Verteilung der zugeführten Wärmemenge von 20% für die Aufheizzone, 70% für die Reaktionszone und 10% für die Entgasungszone der Reaktortrommel. Die über die Heizgasauslassklappen der beiden Heizmantelgehäuse gelangenden und genutzten Heizgase strömen in die Sammelleitung zur Rezirkulation des Heizgases und weisen typischerweise eine Temperatur von 550 °C auf.

Das in der Mischstrecke aus rezirkulierendem Heizgas und frischen Heizgas aus der Brennereinheit erzeugte Heizgas, welches nicht für die Beheizung der Reaktoren benötigt wird, kann einer weiteren thermischen Nutzung als Wärmeträger zugeführt und anschließend gegebenenfalls einer Rauchgasreinigung unterzogen werden.

Ein Vorteil ergibt sich einerseits aus der durch diese Ausführung erzielbaren Wärmeverteilung und andererseits aus der Möglichkeit Schwankungen und Störungen im Prozessablauf eines Reaktors auszugleichen ohne Primärenergie in Form von Erdgas oder Flüssiggas für die Brennereinheit zu verwenden. Eine solche Störung im Prozessablauf kann beispielsweise der oben beschriebene zyklische Betrieb der Rohrreinigungsvorrichtung sein. Vom Sauggebläse der Quencheinheit bereitgestelltes Pyrolysegas (Syngas; nicht kondensierter Anteil der Spaltprodukte) wird in der Brennereinheit vollständig verbrannt.

Das Pyrolysegas hat typischerweise eine Temperatur von 40°C am Quenchaustritt. Bei Schwankungen im Prozessablauf eines Reaktors und einem erhöhten Wärmebedarf der Pyrolyse kann durch Veränderung der Quenchbetriebsparameterdie Quenchaustrittstemperatur der Pyrolysegase erhöht werden. Damit erhöht sich die Pyrolysegasmenge um die Komponenten im Spaltgas die sonst flüssig auskondensiert im Pyrolyseöl vorgelegen hätten. Die Druckregelung für den Innendruck der Reaktoren auf einen Wert im Bereich von 50 bis 150 Pa Überdruck (0,5 bis 1,5 mbar ü) wird über die Saugzuggebläse der Quencheinheit realisiert. Dadurch wird auf Schwankungen bei der entstehenden Pyrolysegasmenge durch Anpassung der Fördermenge im Saugzuggebläse reagiert und die Pyrolysegase der Brennereinheit mit einem Versorgungsüberdruck von 2000 bis 6000 Pa (20 bis 60 mbar ü) zugeführt.

Ein Ausführungsbeispiel und weitere Aspekte der Erfindung sollen in Bezug auf die Figuren näher erläutert werden. Von den Figuren zeigt:
- Figur 1:: Ein System zur Pyrolyse von Altmaterial, insbesondere zur Pyrolyse von Reifenschnitzeln;
- Figur 2:: einen Längsschnitt durch einen erfindungsgemäßen Drehrohrreaktor; und
- Figur 3:: Einrichtungen zur Nachbehandlung des Pyrolysefeststoffs;
- Figur 4:: Einrichtungen zur Feststoffvorreinigung als Teil der Einrichtungen zur Nachbehandlung des Pyrolysefeststoffs aus Figur 3;
- Figur 5:: eine Feinmalanlage der Einrichtungen zur Nachbehandlung des Pyrolysefeststoffs aus Figur 3;
- Figur 6:: eine Perliereinrichtung der Einrichtungen zur Nachbehandlung des Pyrolysefeststoffs aus Figur 3; und
- Figur 7:: eine Trocknung und eine Verpackungseinrichtung der Einrichtungen zur Nachbehandlung des Pyrolysefeststoffs aus Figur 3.

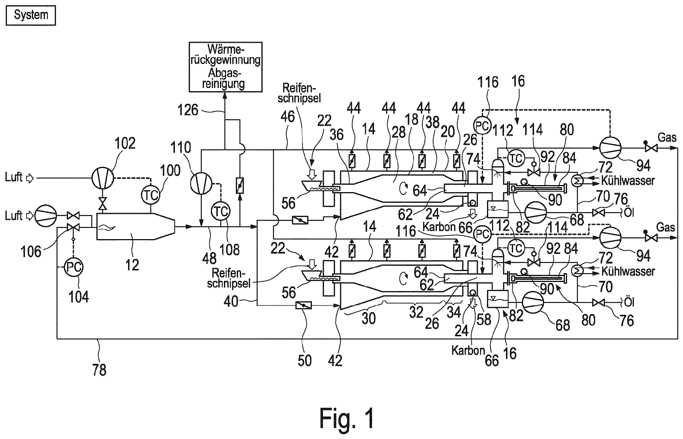

Ein erfindungsgemäßes System 10 zur Pyrolyse von Altmaterial umfasst eine Brennereinheit 12, ein oder mehrere Drehrohrreaktoren 14 und ein oder mehrere Quencheinheiten 16; siehe **Figur 1****.**

Der Drehrohrreaktor 14 weist eine Reaktortrommel 18 auf, die um eine Rotationsachse drehbar in einem Heizmantelgehäuse 20 angeordnet ist.

Die Reaktortrommel 18 weist an ihrem einen Längsende einen Altmaterialeinlass 22 auf und an ihrem anderen Längsende einen Pyrolysefeststoffauslass 24. Außerdem ist die Reaktortrommel 18 mit einem Pyrolysegasauslass 26 verbunden. Die Reaktortrommel 18 umschließt einen Reaktorinnenraum 28, und bildet in diesem Reaktorinnenraum 28 eine Aufheizzone 30, eine Reaktionszone 32 und eine Entgasungszone 34. Der Reaktorinnenraum 28 ist von einer Trommelwand 36 umschlossen, die ihrerseits wiederum von dem Heizmantelgehäuse 20 umschlossen, sodass zwischen dem Heizmantelgehäuse 20 und der Trommelwand 36 ein Heizmantelraum 38 besteht, in dem Heizgas eingeleitet werden kann.

Das Heizgas zum Aufheizen der Reaktortrommel 18 und deren Inhalt wird von der Brennereinheit 12 erzeugt. Über eine Heizgaszuleitung 40 wird Heizgas von der Brennereinheit 12 zu einem Heizgaseinlass 42 in das Heizmantelgehäuse 20 geführt. Der Heizgaseinlass 42 ist in der Nähe des Altmaterialeinlasses 22 unterhalb des Selben angeordnet. Oberhalb der Reaktortrommel 18 weist der Heizmantelraum 38 entlang der Längsachse der Reaktortrommel 18 verteilt mehrere Heizgasauslassklappen 44 auf, deren Öffnungsgrad einstellbar und verstellbar ist. Somit kann durch den Heizgaseinlass 42 in den Heizmantelraum 38 eintretendes Heizgas um die Trommelwand 36 herum zu den Heizgasauslassklappen 44 strömen und auf diese Weise die Reaktortrommel 18 und ihren Inhalt von Au-ßen aufheizen.

Durch Einstellen und gegebenenfalls Steuern des Öffnungsgrades der einzelnen Heizgasauslassklappen 44 kann die Temperaturverteilung in dem Heizmantelraum 38 und damit auch die Temperaturverteilung in dem Reaktorinnenraum 28 gesteuert und eingestellt werden. Auf diese Weise ist es insbesondere möglich, für die Aufheizzone 30, die Reaktionszone 32 und die Entgasungszone 34 in der Reaktortrommel 18 geeignete Temperaturen einzustellen.

Durch die Heizgasauslassklappen 44 aus dem Heizmantelraum 38 austretendes Heizgas wird über einer Heizgasrezirkulationsleitung 46 wieder zurückgeführt und kann mit von der Brennereinheit 12 erzeugtem Heizgas gemischt werden.

Für einen effizienten Betrieb der Pyrolysereaktoren hat sich eine Anordnungsvariante bewährt, bei der eine Brennereinheit 12 zwei Drehrohrreaktoren 14 mit Heizgas versorgt. Das von der Brennereinheit 12 durch Verbrennung der Pyrolysegase mit Luft erzeugte Heizgas erreicht dort eine Temperatur von 850°C. Das Heizgas wird in einer Heizgasmischstrecke 48 mit rezirkuliertem und bereits genutztem Heizgas gemischt, um die erforderliche Heizgastemperatur von 580 bis 680 °C zu erreichen und einen großen Volumenstrom Heizgas bereitzustellen.

Die regulierte Wärmezufuhr zu jedem Drehrohrreaktor 14 erfolgt durch Heizgaseinlassklappen 50 am eintragsseitigen unteren Heizgaseinlass 42 zum Heizmantelraum 38 der Drehrohrreaktoren 14. Die Wärmeverteilung über die Länge der Reaktortrommel 18 wird durch längs über die Heizmantelgehäuselänge oben verteilt angeordnete Heizgasauslassklappen 44 realisiert, deren jeweiliger Öffnungsgrad den Wärmebedarf der jeweiligen Reaktorzone 30, 32 und 34 sicherstellt. Zum Einstellen einer optimalen Wärmeverteilung ist es vorteilhaft, wenn die Stellungen (Öffnungsgrade) der Heizgasauslassklappen 44 sehr genau eingestellt werden können und aufeinander abgestimmt sind. Eine bevorzugte, für Reifenschnitzel bewährte Klappenstellungskonfiguration bewirkt eine Verteilung der zugeführten Wärmemenge von 20% für die Aufheizzone 30, 70% für die Reaktionszone 32 und 10% für die Entgasungszone 34 der Reaktortrommel 18.

Die über die Heizgasauslassklappen 44 der beiden Heizmantelgehäuse 20 gelangenden und genutzten Heizgase strömen in die Sammelleitung 46 der Rezirkulation und weisen typischerweise eine Temperatur von 550 °C auf. Das in der Heizgasmischstrecke 48 aus rezirkulierendem Heizgas und frischen Heizgas aus der Brennereinheit 12 erzeugte Heizgas, welches nicht für die Beheizung der Drehrohrreaktoren 14 benötigt wird, kann einer weiteren thermischen Nutzung als Wärmeträger zugeführt und anschließend gegebenenfalls einer Rauchgasreinigung unterzogen werden. Ein Vorteil ergibt sich einerseits aus der durch diese Ausführung erzielbaren Wärmeverteilung und andererseits aus der Möglichkeit Schwankungen und Störungen im Prozessablauf eines Reaktors auszugleichen ohne Primärenergie in Form von Erdgas oder Flüssiggas für die Brennereinheit 12 zu verwenden.

Vorzugsweise ist die Brenneinheit 12 somit mit zwei Drehrohrreaktoren 14 verbunden, sodass Heizgas über zwei Heizgaszuleitungen (von denen jede zu einem Drehrohrreaktor führt) zu den beiden Drehrohrreaktoren 14 geführt wird und ebenso aus dem jeweiligen Heizmantelgehäuse 20 austretendes Heizgas über eine oben liegende und mittig zwischen den beiden Drehrohrreaktoren angeordnete gemeinsame Heizgasrezirkulationsleitung 46 wieder zurückgeführt werden kann.

Eine weitere Verbesserung des Pyrolyseprozesses - alternativ oder in Ergänzung zu der zuvor beschriebenen Temperatureinstellung - resultiert aus einer Konstruktion der Reaktortrommel, die in geeigneten Verweilzeiten des Pyrolysegutes in den einzelnen Zonen 30, 32, 34 im Inneren der Reaktortrommel resultiert. Die Verweilzeiten sind konstruktiv so eingestellt, dass die jeweiligen Prozesse wie Aufheizen in der Aufheizzone 30, Spaltreaktion oder Pyrolyse bzw. Depolymerisation in der Reaktorzone 32 und Restentgasen in der Entgasungszone 34 bei vorgegebener Drehzahl der Reaktortrommel 18 und vorgegebenen Durchsatz an Pyrolysegut vollständig und zonenbezogen ablaufen.

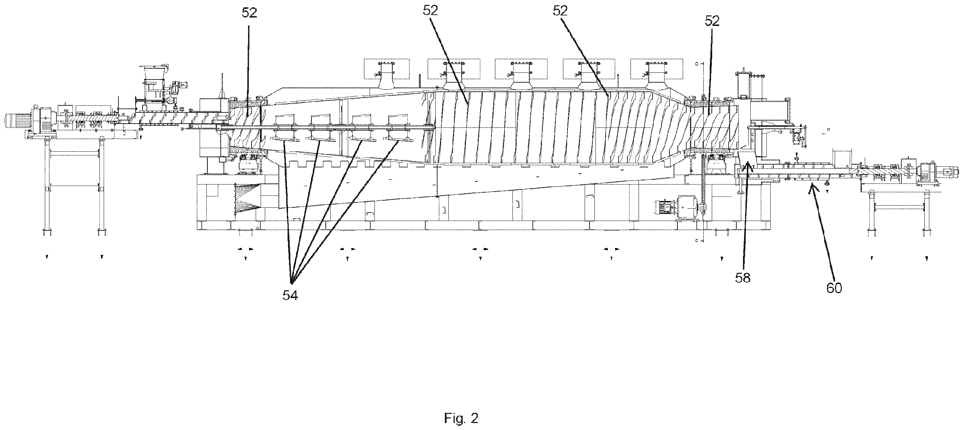

Der Transport des Pyrolysegutes in Längsrichtung der Reaktortrommel 18 von deren Altmaterialeinlass 22 bis hin zum Pyrolysefeststoffauslass 24 wird durch Transportwendeln 52 bewirkt die im Inneren der Reaktortrommel 18 von der Trommelwand 36 ausgehend nach Innen ragend angeordnet sind; siehe **Figur 2****.** Die Transportwendeln 52 im Inneren der Reaktortrommel 18 weisen zonenbezogen unterschiedliche Steigungen auf. Eine Transportwendel 52.1 in der Aufheizzone 30 weist somit eine andere Steigung auf, als eine Transportwendel 52.2 in der Reaktionszone 32 oder eine Transportwendel 52.3 in der Entgasungszone 34. Außerdem weist die Reaktortrommel 18 entlang ihrer Längsachse unterschiedliche Trommeldurchmesser auf. In der Reaktionszone 32 ist der Trommeldurchmesser maximal. Auch der Abstand der Wendelgänge der einzelnen Transportwendeln 52.1, 52.2 und 52.3 ist nicht in allen drei Zonen identisch. Vielmehr sind der jeweilige Trommeldurchmesser der Transporttrommel 18 sowie der Abstand zwischen den Wendelgängen der Transportwendeln 52 für jeder der drei Zonen so dimensioniert, dass sich eine gewünschte Schütthöhe und eine gewünschte Durchmischung der Schüttung des Pyrolysegutes dem jeweils ablaufenden Prozess - also Aufheizen, Spaltreaktion und Restentgasen - genügen.

Neben einem guten Wärmeübergang vom Heizmantelraum 38 zur Trommelwand 36 und von der Trommelwand 36 zum Pyrolysegut in dem Reaktorinnenraum 38 ist eine gute Durchmischung der Feststoffschüttung aus Pyrolysegut für einen hinreichenden Stoff- und Wärmeübergang erforderlich. Die Durchmischung wird durch in den Wendelgängen der Transportwendeln 52 angeordnete Hubschaufeln 54 realisiert.

Im Betrieb des Drehrohrreaktors 14 wird über den Altmaterialeinlass 22 der Reaktortrommel 18 Altmaterial, beispielsweise Reifenschnitzel, als Pyrolysegut zugeführt. Hierzu dient ein Zuführschneckenförderer 56, der das Altmaterial aus dem Altmaterialeinlass 22 in die Reaktortrommel 18 fördert. In der Reaktortrommel 18 wird das Altmaterial von der Transportwendel 52.1 zu der Aufheizzone 30 gefördert und innerhalb der Aufheizzone 30 von den Hubschaufeln 54 durchmischt. Das Pyrolysegut, also beispielsweise die Altreifenschnitzel, werden anschließend in der Reaktionszone 32 von der Transportwendel 52.2 weiter bis hin in die Entgasungszone 34 gefördert. In der Entgasungszone 34 wird das Pyrolysegut dann von der Transportwendel 52.3 mit einer größeren Steigung und daher auch mit einer größeren Fördergeschwindigkeit bis hin zu dem Pyrolysefeststoffauslass 24 gefördert. Am Pyrolysefeststoffauslass 24 fällt der in der Reaktortrommel 18 erzeugte Pyrolysefeststoff in einen Auffangschacht 58, von dem aus er von einem Abführschneckenförderer 60 wegtransportiert wird.

Während der Pyrolyse entstehendes Pyrolysegas kann durch ein Pyrolysegasauslassrohr 62 aus dem Reaktorinnenraum 28 austreten. Vorteilhafterweise reicht das Pyrolysegasauslassrohr 62 vom Pyrolysegasauslass 26 bis in die Reaktionszone 32 hinein. Das Pyrolysegasauslassrohr 62 verläuft zentral in der Reaktortrommel 18 entlang der Rotationsachse der Reaktortrommel 18, wobei ein exaktes Fluchten des Pyrolysegasauslassrohres 62 mit der Rotationsachse der Reaktortrommel 18 nicht erforderlich ist. Während der Pyrolyse in dem Reaktorinnenraum 28 entstehendes Pyrolysegas kann in einer Einlassmündung 64 des Pyrolysegasauslassrohres eintreten und durch das Pyrolysegasauslassrohres 62 durch den Pyrolysegasauslass 26 hindurch zu der Quencheinheit 16 strömen. Die Einlassmündung 64 des Pyrolysegasauslassrohres 62 befindet sich dabei, wie bereits gesagt, im Bereich der Reaktionszone 32. Dadurch wird weitestgehend verhindert, dass in der Entgasungszone 34 aufgewirbelte Feststoffe, die typischerweise staubförmig sind, durch die in der Reaktionszone 32 entstehenden Pyrolysegase mit durch den Pyrolysegasauslass 26 aus dem Reaktorinnenraum 28 mitgeschleppt und ausgetragen werden. Ein weiterer Vorteil des bis in die Reaktionszone 32 hineinragenden Pyrolysegasauslassrohres 62 ist es, dass die während der Pyrolyse entstehenden Spaltprodukte - also das Pyrolysegas - schneller den Reaktorinnenraum 28 verlassen können und solche Nachteile wie die Rekombination der Spaltprodukte sowie die zusätzliche Bildung von Spalt-Kohlenstoff vermieden werden können. Auf diese Weise wird die Qualität des zurückgewonnen Carbon Blacks weiter verbessert.

In der Quencheinheit 16 werden die aus dem Pyrolysegasauslassrohr 62 austretenden Pyrolysegase gekühlt, sodass diejenigen Pyrolysegase mit einer höheren Verdampfungstemperatur zu Pyrolyseöl verflüssigt werden. Die in der Quencheinheit 16 entstehende Flüssigkeit - das Pyrolyseöl - wird in einem Auffangbehälter 66 im unteren Ende der Quencheinheit 16 aufgefangen und mittels einer Pumpe 68 abgefördert. Ein Teil des Pyrolyseöls wird über eine Pyrolyseölrezirkulationsleitung 70 durch einen Flüssigkeitskühler 72 hindurchgeführt und wieder zur Quencheinheit 16 zurückgeführt und dort mittels einer Sprüheinheit 74 versprüht. In der Quencheinheit entstehendes Pyrolyseöl wird - sofern es nicht rezirkuliert wird - über einen Flüssigkeitsauslass 76 abgeführt. In der Quencheinheit 16 verbleibendes, nicht verflüssigtes Pyrolysegas wird schließlich über eine Pyrolysegasleitung 78 der Brennereinheit 12 zugeführt und dort zu Heizgas verbrannt.

Von der Quencheinheit 16 bereitgestelltes Pyrolysegas ist ein Syngas, das von den nicht kondensierten Anteilen der Spaltprodukte der Pyrolyse gebildet wird. Das Pyrolysegas hat am Ausgang der Quencheinheit 16 typischerweise eine Temperatur von 40 °C. Falls es zu Schwankungen im Prozessablauf eines oder beider Drehrohrreaktoren 14 kommt und einem erhöhten Wärmebedarf für die Pyrolyse, kann durch Verändern der Betriebsparameterwerte der Quencheinheit 16 die Quenchaustrittstemperatur der Pyrolysegase erhöht werden. Damit erhöht sich auch die Pyrolysegasmenge um diejenigen Komponenten im Spaltgas, die sonst in der Quencheinheit 16 verflüssigt werden würden und dann flüssig auskondensiert im Pyrolyseöl vorgelegen hätten.

Zum Einstellen und Steuern der Prozessparameter ist die Brennereinheit 12 mit einer Brennersteuereinheit 100 verbunden, um über ein Gebläse 102 die Luftzufuhr zu der Brennereinheit 12 geregelt steuern zu können. Eine Gaszufuhrsteuereinheit 104 steuert über Gaszufuhrventil 106 die der Brennereinheit 12 zugeführte Pyrolysegasmenge.

Die der Heizgasmischstrecke 48 zugeführte rezirkulierte Heizgasmenge wird mittels einer Rezirkulationssteuereinheit 108 geregelt, die ein Rezirkulationsheizgasgebläse 110 steuert.

Zum Regeln der Quenchausgangstemperatur ist eine Quenchtemperatursteuereinheit 112 vorgesehen, die ein Pyrolyseölzirkulationsventil 114 steuert. Auf diese Weise kann die Menge des gekühlten Pyrolyseöls, das in die Quencheinheit 16 eingesprüht wird, gesteuert werden. Wie zuvor beschrieben wird das zirkulierte Pyrolyseöl mittels eines Wasserkühlers gekühlt, sodass über die Menge rückgeführten Pyrolyseöls die Quenchaustrittstemperatur steuerbar ist.

Außerdem ist für jeden der Drehrohrreaktoren 14 eine weitere Prozesssteuereinheit 116 vorgesehen, die jeweils das Saugzuggebläse 94 steuert.

Die Drehrohrreaktoren 14 werden mit einem Innendruck in dem Reaktorinnenraum 28 betrieben, der etwa 50 Pa bis 150 Pa über dem Umgebungsdruck liegt. Dieser Überdruck wird über ein Saugzuggebläse 94 der Quencheinheit 16 realisiert. Dadurch ist es möglich, auf Schwankungen bei der entstehenden Pyrolysegasmenge durch Anpassen der Fördermenge im Saugzuggebläse 94 zu reagieren. Die Pyrolysegase werden der Brennereinheit 12 mit einem Versorgungsüberdruck von 2000 Pa bis 6000 Pa über den Umgebungsdruck zugeführt.

Da trotz des bis in die Reaktionszone 32 hineinragenden Pyrolysegasauslassrohres 62 ein vollständiges Zurückhalten von Feststoffen aus dem Pyrolysegas nicht möglich ist, kommt es längerfristig zu Ablagerungen von koksartigen Verbindungen und Kohlenstoffstaub in dem Pyrolysegasauslassrohr 62. Zum Beseitigen dieser Ablagerungen ist eine Rohrreinigungsvorrichtung 80 vorgesehen, die in regelmäßigen Abständen, zum Beispiel zweimal wöchentlich, zum Einsatz kommen kann. Die Rohrreinigungsvorrichtung 80 weist ein Putzelement82 auf, dessen Außendurchmesserdem Innendurchmesser des Pyrolysegasauslassrohres 62 entspricht. Das Putzelement 82 kann mittels einer Zahnstange 84 in das Pyrolysegasauslassrohr 62 hinein bis hin zur Einlassmündung 64 des Pyrolysegasauslassrohres 62 bewegt werden. Dadurch werden Ablagerungen in dem Pyrolysegasauslassrohr 62 abgetragen und bis zur Einlassmündung 64 des Pyrolysegasauslassrohres 62 transportiert, sodass sie auf diese Weise wieder in die Reaktionszone 32 in der Reaktortrommel 18 gelangen. Anschließend kann das Putzelement 82 wieder mittels der Zahnstange 84 zurückbewegt werden und vollständig aus dem Pyrolysegasauslassrohr 62 herausgeführt werden. Um die Zahnstange 84 anzutreiben, ist eine Antriebseinheit 86 mit einem Getriebemotor 88 und einem Antriebszahnrad 90 vorgesehen. Die Zahnstange 84, das Putzelement 82 und das Antriebszahnrad 90 befinden sich in ihrer Ruhestellung in einem dem Pyrolysegasauslassrohr 62 ausgangsseitig direkt gegenüber angeordneten und geschlossenem Rohrstück 92.

Wenn die Rohrreinigungsvorrichtung 80 zum Einsatz kommt, wird der Pyrolyseprozess kurzzeitig unterbrochen, indem der Reaktortrommel 18 kein Altmaterial zugeführt wird, um die Pyrolysegasbildung zu unterbrechen.

Dies stellt eine Störung im Pyrolyseprozess dar, dessen Folgen durch entsprechende Einstellungen der Heizgasauslassklappen 44 gemindert werden können. Die Folgen für den gleichmäßigen Betrieb können zusätzlich, wie oben beschrieben, durch die Betriebsbedingungen der Quencheinrichtung 12 minimiert werden

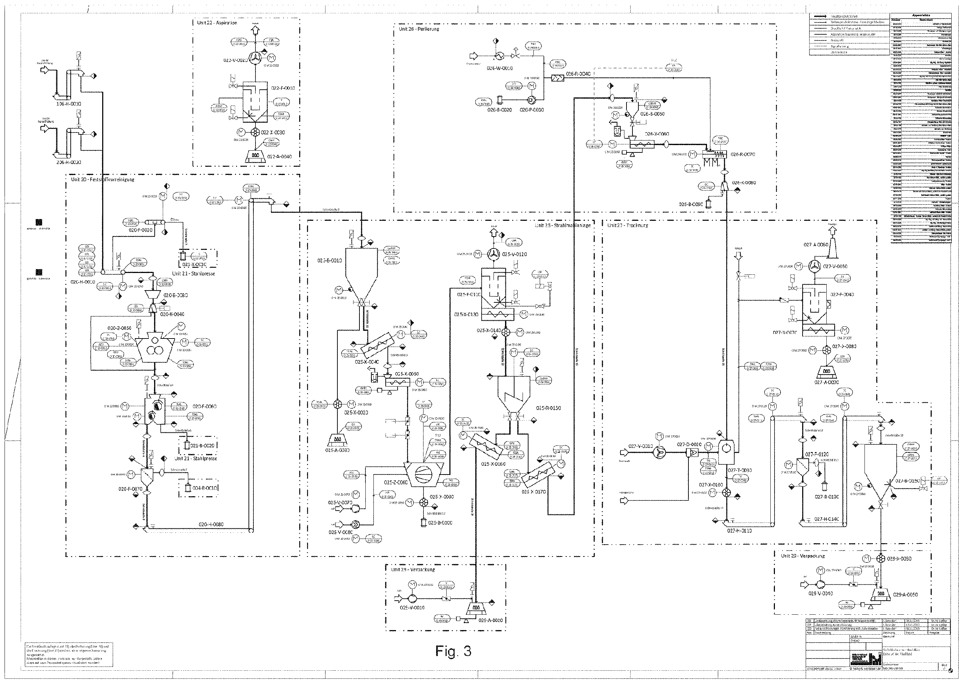

Zur Nachbehandlung des über den Pyrolysefeststoffauslass 58 aus der Reaktortrommel 18 austretenden Pyrolysefeststoffs sind die in **Figur 3** abgebildeten Einrichtungen vorgesehen, die auch als Backend bezeichnet werden.

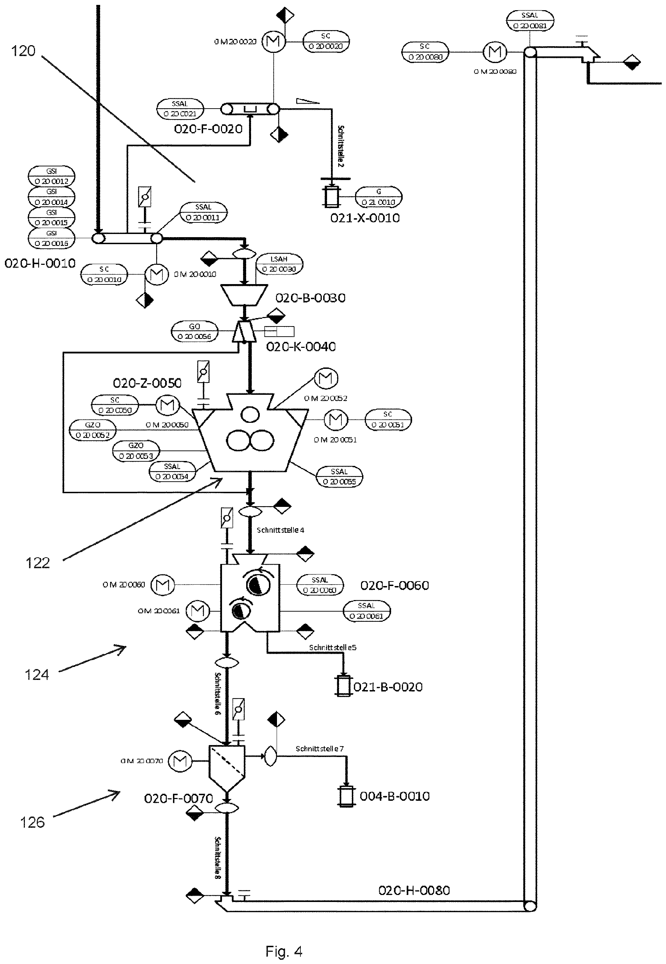

Der aus der Reaktortrommel 18 austretende Pyrolysefeststoff wird zunächst einer Feststoffvorreinigung unterzogen; siehe **Figur 4****.** Hierzu ist eine Vorrichtung 120 zum magnetischen Entfernen grober Anteile aus dem Pyrolysefeststoff vorgesehen. Daraufhin wird der von groben magnetischen Anteilen befreite Pyrolysefeststoff einer Vorrichtung 122 zum Grobzerkleinern des Pyrolysefeststoffs zugeführt. Die Vorrichtung 122 zerkleinert den Pyrolysefeststoff auf Teile kleiner als 2 mm. Der grob zerkleinerte Pyrolysefeststoff wird dann wiederum einer zweiten Vorrichtung 124 zum Entfernen magnetischer Anteile zugeführt. Die Vorrichtung 124 entfernt feinste magnetische Anteile. Die von der Vorrichtung 120 und der Vorrichtung 124 entfernten magnetischen Anteile können jeweils einer Stahlpresse zugeführt werden.

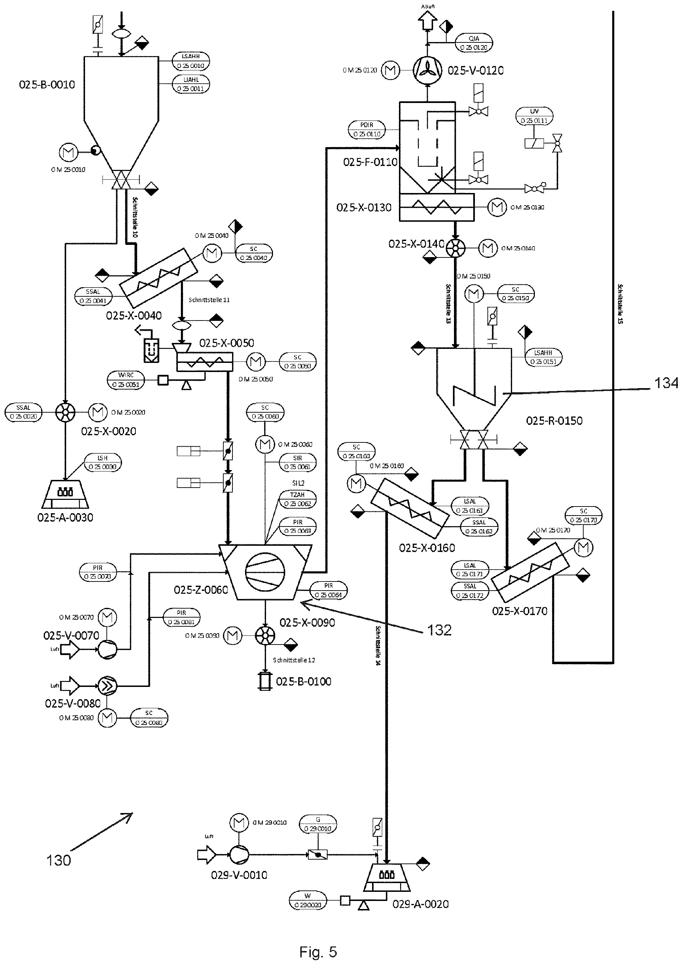

Der von feinen magnetischen Anteilen befreite Pyrolysefeststoff wird schließlich einer Vorrichtung 106 zum Entfernen grober Bestandteile und textiler Bestandteile zugeführt. Der auf diese Weise vorgereinigte Pyrolysefeststoff wird dann einer Feinmahlung, zum Beispiel einer Strahlmalanlage 110 wie sie in **Figur 5** abgebildet ist, zugeführt. Die Strahlmahlanlage 130 weist eine Strahlmahleinrichtung mit Sichterrad 132 auf, die dem Zerkleinern und Sichten des Pyrolysefeststoffs und der Einhaltung einer oberen Grenzkorngröße von zum Beispiel 15µm dient. Anstelle einer Strahlmahleinrichtung kann auch eine Rollermühle im Zusammenspiel mit einem Sichterrad zur Partikelklassierung eingesetzt werden.

Der gemahlene Pyrolysefeststoff wird schließlich einem Rührbehälter 134 zugeführt, der dem Entfernen von Luft aus dem gemahlenen Pyrolysefeststoff dient, um ein gleichmäßiges und erhöhtes Schüttgewicht für eine anschließende Perlierung zu erreichen.

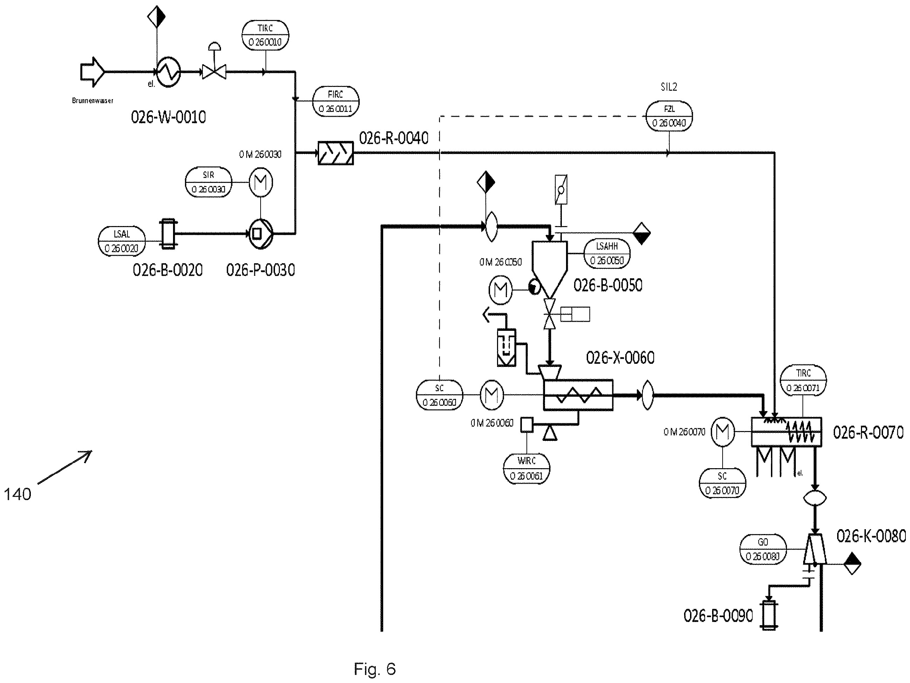

Für die Perlierung ist eine Perliereinrichtung 140 vorgesehen, wie sie in **Figur 6** abgebildet ist. Die Perliereinrichtung 140 weist einen Pinmixer und Dosierausrüstungen für die Zufuhr von Pulver und eines Wasser-Tensid-Gemischs auf.

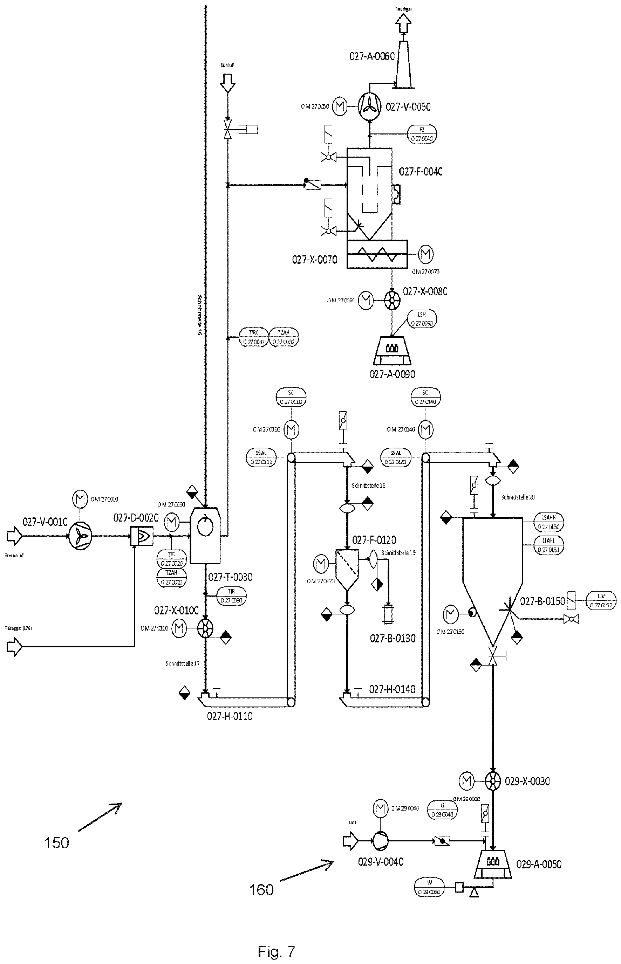

Nach dem Verlassen der Perliereinrichtung 140 wird der perlierte Pyrolysefeststoff einer Trocknung 150 zugeführt; siehe **Figur 7**. Diese weist einen Trommeltrockner oder einen Fließbetttrockner zum Verdampfen des Perlierwassers auf. Die für die Trocknung 150 benötigte Wärme wird vorzugsweise wenigstens zum Teil vom System 10 in Form einer aus dem überschüssigen Heizgas der Rezirkulationsleitung 46 entnommenen Heizgasmenge und über eine Heizgasauslassleitung 126 einem Wärmeträgermedium zugeführten Wärme bereitgestellt; siehe auch Bezugsziffer 126 in Fig. 1.

Nach dem Trocknen des perlierten Pyrolysefeststoffs erfolgt eine Siebklassierung zum Abtrennen von Ober- und Unterkorn aus dem Produktstrom. Ober- und Unterkorn werden dem Feinmahlprozess 130 erneut zugeführt

Schließlich kann der perlierte und siebklassierte Pyrolysefeststoff in einer Verpackungseinrichtung 160 verpackt werden.

### Bezugszeichenliste:

- 10: System
- 12: Brennereinheit
- 14: Drehrohrreaktoren
- 16: Quencheinheit
- 18: Reaktortrommel
- 20: Heizmantelgehäuse
- 22: Altmaterialeinlass
- 24: Pyrolysefeststoffauslass
- 26: Pyrolysegasauslass
- 28: Reaktorinnenraum
- 30: Aufheizzone
- 32: Reaktionszone
- 34: Entgasungszone
- 36: Trommelwand
- 38: Heizmantelraum
- 40: Heizgaszuleitung
- 42: Heizgaseinlass
- 44: Heizgasauslassklappen
- 46: Heizgasrezirkulationsleitung
- 48: Heizgasmischstrecke
- 50: Heizgaseinlassklappe
- 52: Transportwendeln
- 54: Hubschaufeln
- 56: Zuführschneckenförderer
- 58: Auffangschacht
- 60: Abführschneckenförderer
- 62: Pyrolysegasauslassrohr
- 64: Einlassmündung
- 66: Auffangbecken
- 68: Pumpe
- 70: Pyrolyseölrezirkulationsleitung
- 72: Flüssigkeitskühler
- 74: Sprüheinheit
- 76: Flüssigkeitsauslass
- 78: Pyrolysegasleitung
- 80: Rohrreinigungsvorrichtung
- 82: Putzelement
- 84: Zahnstange
- 86: Antriebseinheit
- 88: Getriebemotor
- 90: Antriebszahnrad
- 92: Rohrstück
- 94: Saugzuggebläse
- 100: Brennersteuereinheit
- 102: Gebläse
- 104: Gaszufuhrsteuereinheit
- 106: Gaszufuhrventil
- 108: Rezirkulationssteuereinheit
- 110: Rezirkulationsheizgasgebläse
- 112: Quenchtemperatursteuereinheit
- 114: Pyrolyseölzirkulationsventil
- 116: Prozesssteuereinheit
- 120: Vorrichtung zum magnetischen Entfernen grober Anteile
- 122: Vorrichtung zum Grobzerkleinern des Pyrolysefeststoffs
- 124: zweite Vorrichtung zum Entfernen magnetischer Anteile
- 126: Heizgasauslass
- 130: Feinmahlanlage
- 132: Strahlmahleinrichtung
- 134: Rührbehälter
- 140: Perliereinrichtung
- 150: Trocknung
- 160: Verpackungseinrichtung

## Patentansprüche

1. System (10) zur Pyrolyse von Altmaterial, wobei das System wenigstens einen Drehrohrreaktor (14), eine Quencheinheit (16) und eine Brennereinheit (12) umfasst und
der Drehrohrreaktor (14) eine im Betrieb um eine Längsachse rotierende Reaktortrommel (18) mit einer Trommelwand (36) aufweist, die einen Reaktorinnenraum (28) umschließt,
auf der Innenseite der Trommelwand (36) Fördereinrichtungen (52) angeordnet sind, die bei rotierender Reaktortrommel (18) ein Fördern zu verarbeitenden Altmaterials bewirken,
der Reaktorinnenraum (28) wenigstens eine Aufheizzone (30), eine Reaktionszone (32) und eine Entgasungszone (34) aufweist,
die Reaktortrommel (18) einen Altmaterialeinlass (22) sowie einen Pyrolysefeststoffauslass (24) und einen Pyrolysegaslauslass (26) aufweist und von einem Heizmantelgehäuse (20) umschlossen und drehbar gelagert ist, so dass sich die Reaktortrommel (18) innerhalb des Heizmantelgehäuses (20) um ihre Rotationsachse drehen kann, wobei das Heizmantelgehäuse (20) einen Heizmantelraum (38) umschließt, der innen von der Trommelwand (36) der Reaktortrommel (18) begrenzt ist,
die Brennereinheit (12) zum Verbrennen von Gas zu einem Heizgas und zum Erzeugen eines Heizgasstroms durch den Heizmantelraum (38) ausgebildet ist und hierzu über eine Heizgaszuleitung (40) mit dem Heizmantelgehäuse (20) derart verbunden ist, dass das Heizgas in den Heizmantelraum (38) eingeleitet werden kann, so dass die in dem Heizmantelraum (38) befindliche Reaktortrommel (18) mittels des Heizgases von außen indirekt beheizt werden kann, und
die Quencheinheit (16) mit dem Gasauslass (26) des Drehrohrreaktors (14) verbunden und zum Kühlen von im Betrieb in dem Reaktorinnenraum entstehenden Pyrolysegasen ausgebildet ist,
**dadurch gekennzeichnet, dass** über die Länge des Heizmantelgehäuses (20) mehrere Heizgasauslassklappen (44) verteilt sind, die es ermöglichen die Strömung des Heizgases durch den Heizmantelraum (38) derart zu beeinflussen, dass der Aufheizzone (30), der Reaktionszone (32) und der Entgasungszone (34) in dem Reaktorinnenraum jeweils unterschiedliche Wärmemenge zugeführt werden können.
und dadurch, dass die Fördereinrichtungen Transportwendeln (52) sind, die von entlang einer Helixbahn verlaufenden, von der Trommelwand (36) ausgehende, nach innen in den Reaktorinnenraum ragenden Vorsprünge gebildet sind, wobei die Wendelgänge der Transportwendeln in der Reaktionszone (32) und in der Entgasungszone (34) eine unterschiedliche Steigung haben.

2. System zur Pyrolyse gemäß Anspruch 1, **dadurch gekennzeichnet, dass** die Reaktortrommel (18) entlang ihrer Längsachse unterschiedliche Trommeldurchmesser aufweist und der Trommeldurchmesser in der Reaktionszone (32) ist maximal ist.

3. System zur Pyrolyse gemäß Anspruch 1 oder 2, **dadurch gekennzeichnet, dass** das System eine Brennereinheit (12) umfasst und zwei Drehrohrreaktoren (14) mit jeweils einer Quencheinheit (16).

4. System zur Pyrolyse gemäß wenigstens einem der Ansprüche 1 bis 3 **dadurch gekennzeichnet, dass** jedem Drehrohrreaktor (14) eine Quencheinheit (16) zur Kondensation und Kühlung der Spaltgase zugeordnet ist und der Innendruck im Drehrohrreaktor (14) und der Quencheinheit (16) durch ein Saugzuggebläse (94) zur Absaugung der nicht kondensierten Spaltgasprodukte regelbar ist.

5. System zur Pyrolyse gemäß wenigstens einem der Ansprüche 1 bis 4, **gekennzeichnet durch** ein in die Reaktortrommel (18) des Drehrohrreaktors (14) austragsseitig hineinreichendes Pyrolysegasauslassrohr (62) zur Entnahme der gasförmigen Spaltprodukte aus der Reaktionszone (32) und zum Weiterleiten der Spaltgase zu der Quencheinheit (16).

6. System zur Pyrolyse gemäß wenigstens einem der Ansprüche 1 bis 5, zur gezielten Anpassung der zonenbezogenen Verweilzeiten des Pyrolysegutes innerhalb der Reaktortrommel, **dadurch gekennzeichnet, dass** die Transportwendeln (52) unterschiedliche Abstände und Steigungen aufweisen, der Durchmesser der Reaktortrommel der einzelnen Zonen angepasst ist.

7. Verfahren zum Erzeugen von Pyrolysefeststoff aus Altgummi zur weiteren Verwendung als Ausgangsmaterial für die Herstellung von recovered Carbon Black mittels eines Systems gemäß der Ansprüche 1 bis 6, **dadurch gekennzeichnet ist, dass** das in der Brennereinheit erzeugte Heizgas mit einem rezirkulierten Heizgas gemischt wird und über Heizgaseinlassklappen (50) dem Heizmantelraum (38) der Drehrohrreaktoren (14) zugeführt wird, wobei die Wärmemenge und deren Verteilung bedarfsgerecht den Reaktorinnenräumen (28) zugeführt wird, indem durch über den Heizmantelräumen (38) angeordnete Heizgasauslassklappen (44) und deren Öffnungsgrad die Wärmestromverteilung eingestellt wird, wobei die die Heizmantelräume (38) verlassenden Heizgase beider Drehrohrreaktoren (14) in einer Heizgasrezirkulationsleitung (46) zusammengeführt werden und einer Heizgasmischstrecke (48) zugeführt werden.

8. Verfahren nach Anspruch 7 **dadurch gekennzeichnet, dass** überschüssiges Heizgas über einen Bypass an den Drehrohrreaktoren (14) vorbeigeführt wird und einer weiteren thermischen Nutzung zugeführt wird.

9. Verfahren nach Anspruch 7 oder 8, bei dem die Verteilung des Heizgasstromes im Reaktormantel durch den Öffnungsgrad von drei bis fünf, vorzugsweise vier gleichmäßig längs der Achse verteilten und oben angeordneten Heizgasauslassklappen (44) eingestellt wird.

10. Verfahren nach Anspruch 9 bei dem die Heizgasauslassklappen (44) so eingestellt werden, dass sich eine Wärmeverteilung in Form von Heizgasvolumenstrom im Anteil von 18% bis 22% für die Aufheizzone (30), 65% bis 75% für die Reaktionszone (32) und 8% bis 12% für die Entgasungszone (34) ergibt.

11. Verfahren nach wenigstens einem der Ansprüche 8 bis 11, bei dem der Innendruck im Drehrohrreaktor (14) und der Quencheinheit (16) zwischen 0,5 und 1,5 mbar ü beträgt.

12. Verfahren nach Anspruch 10 und 11 bei dem durch Erhöhen oder Verringern einer Quenchkühlleistung und somit der Austrittstemperatur der Spaltgase die nicht kondensierte Menge Spaltgas derart beeinflusst wird, dass Bedarfsschwankungen in der Feuerungsleistung der Brennereinheit weitestgehend ausgeglichen werden, womit die Nutzung primärere Energiequellen wie Erdgas oder Flüssiggas vermieden werden kann.

13. Verfahren nach Anspruch 10 bis 12 bei dem die beiden Sauggebläse das Syngas/Pyrolysegas einem gemeinsamen Brennersystem zuführen und einen Versorgungsdruck von 20 bis 60 mbar ü, vorzugsweise 40 mbar ü realisieren.

14. Verfahren nach Anspruch 7, bei dem den Altmaterialeinlass (22) der Reaktortrommel (18) Pyrolysegut zugeführt und mittels eines Zuführschneckenförderers (56) aus dem Altmaterialeinlass (22) in die Reaktortrommel (18) gefördert, wo das Pyrolysegut von der Transportwendel (52.1) zu der Aufheizzone (30) gefördert und innerhalb der Aufheizzone (30) von den Hubschaufeln (54) durchmischt wird, wobei das Pyrolysegut anschließend in der Reaktionszone (32) von der Transportwendel (52.2) weiter bis hin in die Entgasungszone (34) gefördert wird, wo das Pyrolysegut dann von der Transportwendel (52.3) mit einer größeren Steigung und daher auch mit einer größeren Fördergeschwindigkeit bis hin zu dem Pyrolysefeststoffauslass (24) gefördert wird, wobei der in der Reaktortrommel 18 erzeugte Pyrolysefeststoff am Pyrolysefeststoffauslass (24) in einen Auffangschacht (58) fällt, von dem aus er von einem Abführschneckenförderer (60) wegtransportiert wird.

## Claims

1. A system (10) for pyrolysis of waste material, wherein the system comprises at least one rotary reactor (14), a quench unit (16) and a burner unit (12), and
the rotary tube reactor (14) has a reactor drum (18) that rotates about a longitudinal axis during operation and has a drum wall (36) that encloses a reactor interior (28),
conveying devices (52) are arranged on the inside of the drum wall (36), which, when the reactor drum (18) is rotating, cause the waste material to be processed to be conveyed,
the reactor interior (28) has at least one heating zone (30), a reaction zone (32) and a degassing zone (34),
the reactor drum (18) has a waste material inlet (22) as well as a pyrolysis solids outlet (24) and a pyrolysis gas outlet (26) and is enclosed by a heating jacket housing (20) and is rotatably mounted, so that the reactor drum (18) can rotate about its axis of rotation within the heating jacket housing (20), wherein the heating jacket housing (20) encloses a heating jacket space (38) which is bounded internally by the drum wall (36) of the reactor drum (18),
the burner unit (12) is designed for burning gas to form a heating gas and for generating a heating gas flow through the heating jacket space (38) and for this purpose is connected to the heating jacket housing (20) via a heating gas supply line (40) in such a way that the heating gas can be introduced into the heating jacket space (38), so that the reactor drum (18) located in the heating jacket space (38) can be heated indirectly from the outside by means of the heating gas, and
the quench unit (16) is connected to the gas outlet (26) of the rotary tube reactor (14) and is designed for cooling pyrolysis gases produced in the reactor interior during operation,
**characterised in that** a plurality of heating gas outlet flaps (44) are distributed over the length of the heating jacket housing (20), which make it possible to influence the flow of the heating gas through the heating jacket chamber (38) in such a way that different amounts of heat can be supplied to the heating zone (30), the reaction zone (32) and the degassing zone (34) in the reactor interior.
and **in that** the conveying devices are transport spirals (52) which are formed by projections extending along a helical path and starting from the drum wall (36) and projecting inwards into the reactor interior, the helical turns of the transport spirals having a different pitch in the reaction zone (32) and in the degassing zone (34).

2. System for pyrolysis according to claim 1, **characterised in that** the reactor drum (18) has different drum diameters along its longitudinal axis and the drum diameter in the reaction zone (32) is maximum.

3. System for pyrolysis according to claim 1 or 2, **characterised in that** the system comprises a burner unit (12) and two rotary tube reactors (14) each with a quenching unit (16).

4. System for pyrolysis according to at least one of claims 1 to 3, **characterised in that** a quench unit (16) for condensing and cooling the fission gases is assigned to each rotary tube reactor (14) and the internal pressure in the rotary tube reactor (14) and the quench unit (16) can be regulated by an induced draught fan (94) for extracting the non-condensed fission gas products.

5. System for pyrolysis according to at least one of claims 1 to 4, **characterised by** a pyrolysis gas outlet pipe (62) extending into the reactor drum (18) of the rotary tube reactor (14) on the discharge side for removing the gaseous fission products from the reaction zone (32) and for passing the fission gases on to the quenching unit (16).

6. System for pyrolysis according to at least one of claims 1 to 5, for targeted adaptation of the zone-related residence times of the pyrolysis material within the reactor drum, **characterised in that** the transport spirals (52) have different spacings and pitches, the diameter of the reactor drum is adapted to the individual zones.

7. Method for producing pyrolysis solid from waste rubber for further use as a starting material for the production of recovered Carbon Black by means of a system according to claims 1 to 6, **characterised in that** the heating gas produced in the burner unit is mixed with a recirculated heating gas and is fed to the heating jacket space (38) of the rotary kiln reactors (14) via heating gas inlet flaps (50), wherein the amount of heat and its distribution is supplied to the reactor interiors (28) as required by adjusting the heat flow distribution by means of heating gas outlet flaps (44) arranged above the heating jacket spaces (38) and their degree of opening, wherein the heating gases of both rotary tube reactors (14) leaving the heating jacket spaces (38) are combined in a heating gas recirculation line (46) and supplied to a heating gas mixing section (48).

8. Method according to claim 7, **characterised in that** surplus heating gas is led past the rotary kiln reactors (14) via a bypass and is fed for further thermal utilisation.

9. Method according to claim 7 or 8, in which the distribution of the heating gas flow in the reactor jacket is adjusted by the degree of opening of three to five, preferably four, heating gas outlet flaps (44) distributed uniformly along the axis and arranged at the top.

10. Method according to claim 9 in which the heating gas outlet flaps (44) are adjusted so that a heat distribution in the form of heating gas volume flow in the proportion of 18% to 22% for the heating zone (30), 65% to 75% for the reaction zone (32) and 8% to 12% for the degassing zone (34) results.

11. Method according to at least one of claims 8 to 11, in which the internal pressure in the rotary tube reactor (14) and the quenching unit (16) is between 0.5 and 1.5 mbar above atmospheric pressure.

12. Method according to claims 10 and 11 in which, by increasing or decreasing a quench cooling capacity and thus the outlet temperature of the fission gases, the non-condensed quantity of fission gas is influenced in such a way that fluctuations in demand in the firing capacity of the burner unit are largely compensated, whereby the use of primary energy sources such as natural gas or liquefied gas can be avoided.

13. Method according to claims 10 to 12 in which the two suction blowers supply the syngas/pyrolysis gas to a common burner system and realise a supply pressure of 20 to 60 mbar above atmospheric pressure, preferably 40 mbar above atmospheric pressure.

14. Method according to claim 7, in which pyrolysis material is fed to the waste material inlet (22) of the reactor drum (18) and is conveyed by means of a feed screw conveyor (56) from the waste material inlet (22) into the reactor drum (18), where the pyrolysis material is conveyed by the transport spiral (52.1) to the heating zone (30) and is mixed within the heating zone (30) by the lifting blades (54), whereby the pyrolysis material is then conveyed in the reaction zone (32) by the transport spiral (52.2) further into the degassing zone (34), where the pyrolysis material is then conveyed by the transport spiral (52.3) with a greater pitch and therefore also with a greater conveying speed up to the pyrolysis solids outlet (24), the pyrolysis solids produced in the reactor drum (18) falling at the pyrolysis solids outlet (24) into a collecting shaft (58), from which it is transported away by a discharge screw conveyor (60).

## Revendications

1. Système (10) de pyrolyse de produits de récupération, dans lequel le système comprend au moins un réacteur (14) à tube tournant, une unité (16) de refroidissement et une unité (12) à brûleur et
le réacteur (14) à tube tournant a un tambour (18) formant réacteur tournant autour d'un axe longitudinal et ayant une paroi (36) de tambour, qui entoure un espace (28) intérieur de réacteur,
sur la face intérieure de la paroi (36) du tambour sont disposés des dispositifs (52) de transport, qui, lorsque le tambour (18) formant réacteur tourne, provoque un transport des produits de récupération à traiter,
l'espace (28) intérieur de réacteur a au moins une zone (30) de chauffage, une zone (32) de réaction et une zone (34) de dégazage,
le tambour (18) formant réacteur a une entrée (22) de produits de récupération, ainsi qu'une sortie (24) de matières solides de pyrolyse et une sortie (26) de gaz de pyrolyse et est entouré d'une enveloppe (20) latérale de chauffage et est monté tournant, de manière à ce que le tambour (18) formant réacteur puisse tourner autour de son axe de révolution à l'intérieur de l'enveloppe (20) latérale de chauffage, dans lequel l'enveloppe (20) latérale de chauffage entoure un espace (38) latéral de chauffage, qui est délimitée à l'intérieur par la paroi (36) du tambour (18) formant réacteur,
l'unité (12) à brûleur est constituée pour la combustion de gaz en un gaz de chauffage et pour la production d'un courant de gaz de chauffage dans l'espace (38) latéral de chauffage et communique à cet effet par un conduit (40) de gaz de chauffage avec l'enveloppe (20) latérale de chauffage, de manière à pouvoir introduire le gaz de chauffage dans l'espace (38) latéral de chauffage, en sorte que le tambour (18) formant réacteur, se trouvant dans l'espace (38) latéral de chauffage, puisse être chauffé indirectement de l'extérieur au moyen du gaz de chauffage, et
l'unité (16) de refroidissement communique avec la sortie (26) de gaz du réacteur (14) à tube tournant et est constituée pour le refroidissement de gaz de pyrolyse se créant en fonctionnement dans l'espace intérieur de réacteur,
**caractérisé en ce que**, sur la longueur de l'enveloppe (20) latérale de chauffage, sont répartis plusieurs volets (44) de sortie de gaz de chauffage, qui rendent possible d'influencer l'écoulement du gaz de chauffage dans l'espace (38) latéral de chauffage, de manière à pouvoir apporter des quantités de chaleur respectivement différentes à la zone (30) de chauffage, à la zone (32) de réaction et à la zone (34) de dégazage dans l'espace intérieur formant réacteur,
et **en ce que** les dispositifs de transport sont des hélices (52) de transport, qui sont formées de saillies s'étendant suivant un chemin d'hélice partant de la paroi (36) de tambour et en saillie vers l'intérieur dans l'espace intérieur de réacteur, les chemins des hélices de transport ayant des pas différents dans la zone (32) de réaction et dans la zone (34) de dégazage.

2. Système de pyrolyse suivant la revendication 1, **caractérisé en ce que** le tambour (18) formant réacteur a un diamètre de tambour différent suivant sa direction longitudinale et le diamètre du tambour est maximum dans la zone (32) de réaction.

3. Système de pyrolyse suivant la revendication 1 ou 2, **caractérisé en ce que** le système comprend une unité (12) à brûleur et deux réacteurs (14) à tube tournant ayant respectivement une unité (16) de refroidissement.

4. Système de pyrolyse suivant au moins l'une des revendications 1 à 3, **caractérisé en ce que**, à chaque réacteur (14) à tube tournant, est affectée une unité (16) de refroidissement pour la condensation et le refroidissement des gaz de craquage et la pression à l'intérieur du réacteur (14) à tube tournant et de l'unité (16) de refroidissement est réglable par une soufflante (94) à tirage par aspiration pour l'aspiration des produits de gaz de craquage non condensés.

5. Système de pyrolyse suivant au moins l'une des revendications 1 à 4, **caractérisé par** un tuyau (62) de sortie du gaz de pyrolyse atteignant, du côté de la sortie, le tambour (18) formant réacteur (14) à tube tournant, pour le prélèvement des produits de craquage gazeux de la zone (32) de réaction et pour l'acheminement des gaz de craquage à l'unité (16) de refroidissement.

6. Système de pyrolyse suivant au moins l'une des revendications 1 à 5, pour l'adaptation ciblée des temps de séjour rapportés aux zones du produit de pyrolyse dans le tambour de réacteur, **caractérisé en ce que** les hélices (52) de transport ont des distances et des pas différents, le diamètre du tambour de réacteur étant adapté aux diverses zones.

7. Procédé de production de matière solide de pyrolyse, à partir de caoutchouc de récupération à des fins d'autres utilisations comme matière de départ pour la fabrication de noir de carbone recyclé, au moyen d'un système suivant les revendications 1 à 6, **caractérisé en ce que** l'on mélange le gaz de chauffage dans l'unité à brûleur à un gaz de chauffage en recirculation et on l'envoie, par des volets (50) d'entrée de gaz de chauffage, à l'espace (38) latéral de chauffage des réacteurs (14) à tube tournant, dans lequel on envoie la quantité de chaleur et sa répartition conformément aux besoins aux espaces (28) intérieurs de réacteur en réglant, par des volets (44) de sortie de gaz de chauffage, montés sur les espaces (38) latéraux de chauffage, et par leurs degrés d'ouverture, la répartition du flux de chaleur, dans lequel on réunit les gaz de chauffage, quittant les espaces (38) latéraux de chauffage, des deux réacteurs (14) à tube tournant dans un conduit (46) de recirculation de gaz de chauffage et on les envoie à une zone (48) de mélange de gaz de chauffage.

8. Procédé suivant la revendication 7, **caractérisé en ce que** l'on fait contourner les réacteurs (14) à tube tournant par du gaz de chauffage en excès par une dérivation et on l'envoie à une autre utilisation thermique.

9. Procédé suivant la revendication 7 ou 8, dans lequel on règle la répartition du courant de gaz de chauffage dans l'enveloppe du réacteur par le degré d'ouverture de trois à cinq, de préférence de quatre, volets (44) de sortie de gaz de chauffage répartis uniformément le long de l'axe et montés en haut.

10. Procédé suivant la revendication 9, dans lequel on règle les volets (44) de sortie du gaz de chauffage de manière à obtenir une répartition de la chaleur sous la forme de courants en volume de gaz de chauffage en une proportion de 18 % à 22 % pour la zone (30) de chauffage, de 65 % à 75 % pour la zone (32) de réaction et de 8 % à 12 % pour la zone (34) de dégazage.

11. Procédé suivant au moins l'une des revendications 8 à 11, dans lequel la pression à l'intérieur, dans le réacteur (14) à tube tournant et dans l'unité (16) de refroidissement, est comprise entre 0,5 et 1.5 mbar relatif.

12. Procédé suivant la revendication 10 et 11, dans lequel en augmentant ou en diminuant une puissance de refroidissement et ainsi la température de sortie des gaz de craquage, on influence la quantité non condensée de gaz de craquage, de manière à compenser, dans une grande mesure, des fluctuations de la puissance de chauffage de l'unité à brûleur, grâce à quoi on peut empêcher l'utilisation de sources d'énergies primaires comme du gaz naturel et du gaz liquéfié.

13. Procédé suivant la revendication 10 à 12, dans lequel les deux soufflantes d'aspiration envoient le gaz de synthèse / gaz de pyrolyse à un système de brûleur commun et réalisent une pression d'alimentation de 20 à 60 mbar relatif, de préférence de 40 mbar relatif.

14. Procédé suivant la revendication 7, dans lequel on envoie à l'entrée (22) de produits de récupération du tambour (18) formant réacteur du produit de pyrolyse et on le transporte au moyen d'un transporteur (56) à vis d'apport de l'entrée (22) de produits de récupération au tambour (18) formant réacteur, où on transporte le produit de pyrolyse de l'hélice (52.1) de transport à la zone (30) de chauffage et on le mélange dans la zone (30) de chauffage par les pales (54) élévatrices, dans lequel on transporte le produit de pyrolyse à la suite de la zone (32) de réaction, par l'hélice (52.2) de transport, plus loin jusque dans la zone (34) de dégazage, où on transporte alors le produit de pyrolyse par l'hélice (52.3) de transport ayant un pas plus grand et donc également une vitesse de transport plus grande jusqu'à la sortie (24) du produit solide de pyrolyse, dans lequel le produit solide de pyrolyse, produit dans le tambour 18 de réacteur, à la sortie (24) du produit solide de pyrolyse tombe dans un puits (58) de recueil, dont il est retiré par un transporteur (60) à vis d'évacuation.
